# EUROPÄISCHE PATENTANMELDUNG

(11) **EP 0 980 846 A1**
(43) Veröffentlichungstag der Anmeldung: **23.02.2000**
(21) Anmeldenummer: 99114765.3
(22) Anmeldetag: 28.07.1999
(51) Int. Cl.: C02F 11/08

(54) **Verfahren zur Reinigung von Abwässern aus dem Hock-Verfahren**

(30) Priorität: 20.08.1998 DE 19837723
(71) Anmelder: Phenolchemie GmbH & Co. KG, 45966 Gladbeck (DE)
(72) Erfinder: Gerlich, Otto, Dr., 45966 Galdbeck (DE); Pompetzki, Werner, Dr., 46284 Dorsten (DE); Ahrens, Dietmar, 26871 Aschendorf (DE)

(57) **Zusammenfassung**

Bei der Herstellung von z.B. Phenol und Aceton nach dem Hock-Verfahren fallen verschiedene mit organischen und/oder anorganischen Stoffen verunreinigte Abwasserströme an, deren Abwasserfracht aus Gründen des Umweltschutzes und der Wirtschaftlichkeit soweit wie möglich auf einfache Weise verringert werden muß.

Überraschenderweise werden bei den sauren oder sauer eingestellten Abwässern verbesserte Abbauraten durch eine Naßoxidation bei Drucken von über 25 bar und Temperaturen von 150 bis 250°C erzielt.

## Beschreibung

Die vorliegende Erfindung betrifft ein Verfahren zur Reinigung von Abwässern, die bei der Herstellung von Hydroxy- und Carbonyl-Verbindungen nach dem Hock-Verfahren anfallen, durch Naßoxidation. Insbesondere betrifft die Erfindung ein Verfahren zur Reinigung von Abwässern, die bei der Herstellung von Phenol und Aceton nach dem Hock-Verfahren anfallen, durch Naßoxidation.

Das Prinzip der kombinierten Herstellung von Phenol und Aceton nach dem Hock-Verfahren beruht auf der Oxidation von Cumol zu Cumolhydroperoxid und der anschließenden säurekatalysierten Spaltung des Cumolhydroperoxids zu Phenol und Aceton, wobei als Katalysator vorzugsweise Schwefelsäure eingesetzt wird. Je nach Prozeßführung wird die Phenol- und Aceton-Gewinnung von einer mehr oder weniger starken Nebenproduktbildung begleitet. Die unterschiedlichen Abwasserströme, die im Prozeß gewöhnlich insbesondere durch verschiedene Waschvorgänge im Zuge der Aufarbeitung des Spaltprodukts anfallen, sind daher in der Regel mit verschiedenen organischen und/oder anorganischen Stoffen in unterschiedlicher Konzentration belastet. Gleiches gilt im allgemeinen auch für Abwässer aus anderen Hock-Verfahren. Diese teils sauren, teils basischen Abwässer bedürfen - entweder vereint oder auch getrennt - vor der Einleitung in eine biologische Kläranlage gewöhnlich zur Reduzierung der Abwasserfracht einer Vorbehandlung, um die biologische Reinigungsstufe nicht zu überlasten bzw. um den Gehalt an biologisch schlecht abbaubaren Inhaltsstoffen zu senken. Insbesondere dürfen phenolhaltige Abwässer aufgrund der Toxizität des Phenols nicht in offene Gewässer abgeleitet werden.

Zur Reinigung phenolhaltiger Abwässer aus dem Hock-Prozeß sind extraktive Verfahren mit z. B. Cumol oder Acetophenon als Extraktionsmittel (z. B. DE-1 075 119 und DE-22 35 493), Wasserdampfdestillationsverfahren und Adsorptionsverfahren auf oberflächenaktiven Substanzen wie Aktivkohle oder Kunstharzionenaustauschern bekannt (vgl. Ullmann's Encyclopedia of Industrial Chemistry, 5. Edition, Vol. A19, S. 308, VCH Verlagsgesellschaft, Weinheim, 1991). Es wird ein Restgehalt an Phenol erreicht, der in einer biologischen Kläranlage beseitigt werden kann.

In jüngster Zeit werden jedoch vermehrt noch geringere Abwasserfrachten angestrebt, als sie mit diesen auf Phenol ausgerichteten Verfahren allein erreichbar sind. Eine möglichst geringe Abwasserfracht in bezug auf das gesamte Spektrum möglicher Inhaltstoffe ist dabei nicht zuletzt aus Umweltschutzgründen erwünscht; oft greifen hier auch behördliche Auflagen und Grenzwerte oder eine mit dem Frachtaufkommen steigende Abwasserabgabe regulierend ein.

Ein allgemein bekanntes Verfahren der chemischen Abwasserbehandlung zur Verbesserung der biologischen Abbaubarkeit von Abwasserinhaltsstoffen und zur Reduzierung der Abwasserfracht stellt die Naßoxidation dar. Die Naßoxidation ist ein Verfahren, bei dem unter erhöhter Temperatur und einem zur Aufrechterhaltung der flüssigen Phase erhöhten Druck Abwasserströme, deren Inhaltsstoffe im Verlauf der biologischen Abwasserreinigung zu langsam abgebaut werden oder die diesen Abbau nachteilig beeinflussen können, aufgearbeitet werden. Als Oxidationsmittel dienen vorzugsweise Luft oder Sauerstoff. Im Idealfall entstehen aus z. B. Kohlenwasserstoffen bei der Naßoxidation ausschließlich Kohlendioxid und Wasser. Es wird grob zwischen Niederdruck- (120 °C, 6 bar) und Hochdruckverfahren (320 °C, 200 bar) unterschieden (Römpp-Chemie-Lexikon, 9. Aufl., 1991). Obwohl tendenziell im allgemeinen höhere Temperaturen bei der Naßoxidation höhere Abbauraten bewirken, sind die erreichbaren Abbauraten stets stoffspezifisch (siehe z. B. Perkow, Steiner, Vollmüller: Naßoxidation - Ein Beitrag zum Stand der Technik, Chem.-Ing.-Tech. 52 (1980), Nr. 12, S. 943 ff.). Es sind daher verschiedene Naßoxidationsverfahren für spezielle Anwendungsfälle entwickelt worden, so z. B. für Abwässer aus der cyclischen Kondensation von Aceton (DE-44 28 413 A1) oder für cyanidhaltige Abwässer (z. B. DE-44 10 045 A1). Auch der Einsatz von Katalysatoren bei der Naßoxidation zur Herabsetzung der erforderlichen Temperatur ist bekannt (z. B. DE-196 05 421 A1).

Aus JP-1-310794 ist ein vorzugsweise für die Reinigung von Abwässern aus dem Hock-Verfahren geeignetes Naßoxidationsverfahren bekannt: Die organische Substanzen enthaltenden Abwässer werden - vorzugsweise mit Schwefelsäure. Salpetersäure oder Salzsäure - auf einen pH-Wert von 1 bis 3 eingestellt und anschließend mit einem sauerstoffhaltigen Gas bei hohen Temperaturen und Drücken in flüssiger Phase ohne Katalysator behandelt. Bevorzugt erfolgt die Behandlung bei 175 °C bis 200 °C und offenbar Überdrücken zwischen ca. 3 und 6 bar bezogen auf den Dampfdruck, d. h. bei Drücken zwischen ca. 12 und 22 bar absolut, über 2 bis 6 Stunden. Das sauerstoffhaltige Gas kann z. B. reiner Sauerstoff oder Luft sein.

Aufgabe der vorliegenden Erfindung ist es, ein verbessertes Verfahren zur Naßoxidation von Abwässern, die bei der Herstellung von Hydroxyl- und Carbonyl-Verbindungen aus Hydroperoxiden nach dem Hock-Verfahren anfallen, bereitzustellen, das eine stärkere Reduzierung der Abwasserfracht auf einfache Weise ermöglicht. Insbesondere soll dieses Verfahren geeignet sein zur Reinigung von Abwässern aus der Phenol- und Aceton-Herstellung nach dem Hock-Verfahren.

Diese Aufgabe wird erfindungsgemäß gelöst gemäß Patentanspruch 1 durch ein Verfahren zur Reinigung von sauren oder sauer eingestellten Abwässern, die bei der Herstellung von Hydroxy- und Carbonyl-Verbindungen aus Hydroperoxiden nach dem Hock-Verfahren anfallen, durch Naßoxidation in flüssiger Phase mit sauerstoffhaltigem Gas, das dadurch gekennzeichnet ist, daß die Abwässer bei Drücken von über 25 bar absolut und Temperaturen von 150 bis 250 °C behandelt werden. Vorzugsweise betragen der Druck 30 bis 50 bar absolut und die Temperatur 175 bis 250 °C.

Überraschenderweise wurde gefunden, daß im Vergleich zum Stand der Technik aus JP 1-310794 einfach durch eine moderate Anhebung des Drucks bei der Naßoxidation bei ansonsten gleichen oder ähnlichen Temperaturen eine deutliche Steigung der Abbaurate und damit Verringerung der Abwasserfracht in diesen Abwässern erreicht werden kann. Dies ist um so überraschender, als normalerweise vor allem eine höhere Temperatur höhere Abbauraten bewirkt und der Druck nur zur Aufrechterhaltung der flüssigen Phase angepaßt wird. Im Gegensatz zu JP 1-310794 ist erfindungsgemäß eine Ansäuerung der Abwässer auf pH-Werte von 1 bis 3 nicht zwingend für die Naßoxidation, sondern vielmehr sogar unerwünscht, da der niedrige pH-Wert die weitere Abwasserbehandlung aufwendiger macht. Der moderate, bevorzugte Reaktionsdruck zwischen 30 und 50 bar absolut ist technisch dagegen noch recht leicht zu realisieren und erfordert im Gegensatz zur Hochdrucknaßoxidation noch keine entsprechenden Hochdruckapparaturen.

Die erfindungsgemäß zu behandelnden Abwässer entstammen vorzugsweise dem Hock-Prozeß zur Herstellung von Phenol und Aceton aus Cumol. Größere Abwasserströme entstehen hier z. B. bei der Neutralisation des sauren Spaltprodukts aus der meist mit Schwefelsäure katalysierten Cumolhydroperoxidspaltung mit gewöhnlich Phenolat- oder Alkalilauge und anschließender Phasentrennung (sog. Spaltproduktwäsche) oder bei der Aufbereitung von Wasser aus der Zerlegung von Phenolatlauge, die aus der Cumolwäsche stammt. Aufgrund der Nebenproduktbildung während des Prozesses können die teils sauren, teils basischen Abwässer - je nach Herkunft - in unterschiedlichem Ausmaß neben Phenol und Aceton verschiedene organische und/oder anorganische Stoffe wie z. B. Essigsäure, Ameisensäure, kondensierte Phenole u. ä. enthalten. Sie besitzen typischerweise TOC-Werte (TOC: Total Organic Carbon) von 5 000 bis 10 000 mg/l, einen chemischen Sauerstoffbedarf (CSB) von 10 000 bis 22 000 mg/l und einen biologischen Sauerstoffbedarf (BSB₅) von 5 000 bis 11 000 mg/l. Die erfindungsgemäß zu behandelnden Abwässer können aber auch aus Hock-Verfahren zur Herstellung von z. B. Cyclodecanon, Hydrochinon u. ä. stammen.

Die Abwässer können vor der erfindungsgemäßen Behandlung mittels Naßoxidation ganz oder teilweise vereint oder auch getrennt der erfindungsgemäßen Naßoxidation zugeführt werden. Gegebenenfalls anfallende alkalische Abwässer werden erfindungsgemäß vor der Naßoxidation so mit anderen sauren Prozeßabwässern vereint oder mittels Säure, vorzugsweise Schwefelsäure, so eingestellt, daß sie einen pH-Wert im sauren Bereich kleiner 7 aufweisen.

Es kann vorteilhaft sein, die Abwässer vor der Behandlung mit dem erfindungsgemäßen Verfahren zunächst einem Verfahren zur Reduzierung des Phenolgehalts zu unterziehen, z. B. einer Extraktion mit Hilfe von Cumol. Da die Abwässer für eine Phenolextraktion ohnehin sauer gestellt werden, bietet sich hier im Anschluß eine erfindungsgemäße Behandlung zur weiteren Reduzierung der Abwasserfracht besonders an. Es kann auch vorteilhaft sein, die zu behandelnden Abwässer vor der erfindungsgemäßen Naßoxidation zusätzlich oder ausschließlich einer Strippung zur Verringerung des Gehalts an Leichtsiedern zu unterziehen.

Vorzugsweise werden die Abwässer vor der erfindungsgemäßen Behandlung derart vorbehandelt und/oder vereint, daß sie einen sauren pH-Wert von größer als 3, besonders bevorzugt zwischen 3 und 5, und Phenolgehalte von bis zu etwa 500 ppm aufweisen.

Die erfindungsgemäße Naßoxidation selbst erfolgt im angegebenen Temperatur- und Druckbereich üblicherweise und bevorzugt in herkömmlichen Blasensäulenreaktoren.

Zur Verbesserung der Korrosionseigenschaften ist es vorteilhaft, mit z. B. Tantal oder Titan/Tiandioxid ausgekleidete Apparate zu verwenden.

Als sauerstoffhaltiges Gas dient vorzugsweise Luft, reiner Sauerstoff oder ein Gemisch beider Gase. Bevorzugt werden etwa 100 bis 150 % der stöchiometrisch benötigten Sauerstoffmenge dem Abwasser mit dem sauerstoffhaltigen Gas zugeführt Die Verweilzeit im Reaktor beträgt 2 bis 8 Stunden, bevorzugt 4 bis 6 Stunden.

Wie die nachfolgenden Beispiele belegen, lassen sich mit Hilfe des erfindungsgemäßen Verfahrens insbesondere für saure oder sauer eingestellte Abwässer aus dem Hock-Prozeß zur Phenol- und Aceton-Herstellung aus Cumol auf sehr einfache Weise deutlich höhere TOC- und CSB-Abbauraten erzielen als mit bekannten Verfahren. Diese Ergebnisse sind auf Abwässer aus anderen Hock-Verfahren im wesentlichen übertragbar. Dadurch mindert sich die Abwasserfracht und die Belastungszahl des behandelten Abwassers erheblich. Sind entsprechend der Belastungszahl des Abwassers bei Einleitung in eine biologische Kläranlage Abgaben zu entrichten, sinken diese Gebühren entsprechend. Das erfindungsgemäße Verfahren ist damit sowohl aus Umweltschutzgründen als auch aus wirtschaftlichen Gründen attraktiv.

Zur weiteren Verbesserung der Abbauraten kann es vorteilhaft sein, Katalysatoren wie z. B. Fe⁺⁺-Salze in Kombination mit chinoiden Verbindungen wie z. B. Hydrochinon oder Anthrachinon bei der erfindungsgemäßen Naßoxidation zusätzlich einzusetzen. Der Einsatz eines Katalysators wird jedoch nicht generell empfohlen, da er mit der Notwendigkeit der Abtrennung des Katalysators aus dem Abwasser vor der Einleitung in eine Kläranlage verbunden ist, wodurch der Aufwand des Verfahrens je nach Katalysator stark zunimmt.

Der bevorzugte erfindungsgemäße Verzicht auf eine Absenkung des pH-Werts auf einen Wert von 1 bis 3 im zu behandelnden Abwasser, wie JP 1-310794 dies lehrt, führt bei diesen Abwässern ferner zu einer Reduzierung des Laugebedarfs für die Neutralisation der Abwässer vor der Abgabe an eine biologische Kläranlage. Damit einher geht ein entsprechend verringerter Salzgehalt dieser Abwässer. Ein weiterer Vorteil des höheren pH-Werts ist in der verringerten Werkstoffkorrosion durch diese Abwässer zu sehen, was sich in den Apparatekosten und Instandhaltungskosten für das erfindungsgemäße Verfahren niederschlägt.

Das erfindungsgemäße Verfahren wird durch die folgenden Beispiele erläutert, ohne darauf beschränkt zu sein:

### Vergleichsbeispiel 1:

660 ml eines aus der Spaltproduktwäsche einer Phenolanlage nach dem Hock-Verfahren stammenden Abwassers mit einem TOC-Wert von 3 927 mg/l, einem CSB-Wert von 9 697 mg/l, einen BSB₅-Wert von 5 500 mg/l und einem pH-Wert von 2,95 werden in einen gerührten Autoklaven aus Tantal mit einem Gesamtfüllvolumen von 1 l gefüllt. Der verbliebene Gasraum wird dreimal mit Sauerstoff gespült, um einen reine Sauerstoffatmosphäre im Gasraum herzustellen. Der Autoklav wird innerhalb von ca. 60 bis 90 Minuten auf eine Reaktionstemperatur von 175 °C erwärmt. Der Reaktionsdruck von 13 bar absolut wird nach dem Erreichen der Reaktionstemperatur eingestellt. In Abhängigkeit von der Zeit werden über einen Probeentnahmestutzen Abwasserproben von 20 ml entnommen, um den zeitlichen Verlauf der Änderung des TOC- und CSB-Wertes kontrollieren zu können. Nach Beendigung des Versuchs nach 6 Stunden wird der BSB₅-Wert des behandelten Abwassers bestimmt. Die ermittelten Werte zeigt Tabelle 1.

Die Reaktionsbedingungen in diesem Vergleichsbeispiel entsprechen also den Angaben aus JP-1-310794.

### Beispiel 2 (erfindungsgemäß):

Ebenfalls 660 ml aus dem gleichen Abwasserstrom mit anfangs einem TOC-Wert von 3 748 mg/l, einem CSB-Wert von 9 697, einem BSB₅-Wert von 5 500 mg/l und einem pH-Wert von 3,2 werden auf ansonsten gleiche Weise wie in Vergleichsbeispiel 1 bei einem Reaktionsdruck von 50 bar absolut und einer Reaktionstemperatur von 175 °C behandelt. Im Vergleich zu Vergleichsbeispiel 1 weichen die Reaktionsbedingungen also vor allem im Reaktionsdruck ab. Die ermittelten TOC-, CSB- und BSB₅-Werte zeigt ebenfalls Tabelle 1.

Ein Vergleich der ermittelten Werte mit Vergleichsbeispiel 1 zeigt, daß mit Hilfe der erfindungsgemäßen Behandlung bei höherem Druck aber gleicher Temperatur eine deutliche Verbesserung der Abbauraten um bis zu 20 Prozentpunkte erzielt wird.

### Beispiele 3 bis 7 (erfindungsgemäß):

In den Beispielen 3 bis 7 werden ebenfalls 660 ml des im Vergleichsbeispiel 1 genannten Abwasserstroms aus der Spaltproduktwäsche eingesetzt. Die Ausgangswerte für TOC, CSB, BSB₅ und pH zeigt Tabelle 1. Der pH-Wert wurde hier im Rahmen dieser Beispiele durch Zugabe von Natronlauge eingestellt. Die Versuchsdurchführung erfolgte jeweils analog zu Vergleichsbeispiel 1 bei den in Tabelle 1 angegebenen Drücken und Temperaturen. Auf die abschließende Bestimmung des BSB₅-Wertes wurde verzichtet.

Die jeweils ermittelten TOC- und CSB-Werte der Abwässer während und nach der erfindungsgemäßen Behandlung zeigt wieder Tabelle 1. Die Ergebnisse belegen klar den verbesserten Abbau der Abwasserfracht durch das erfindungsgemäße Verfahren.

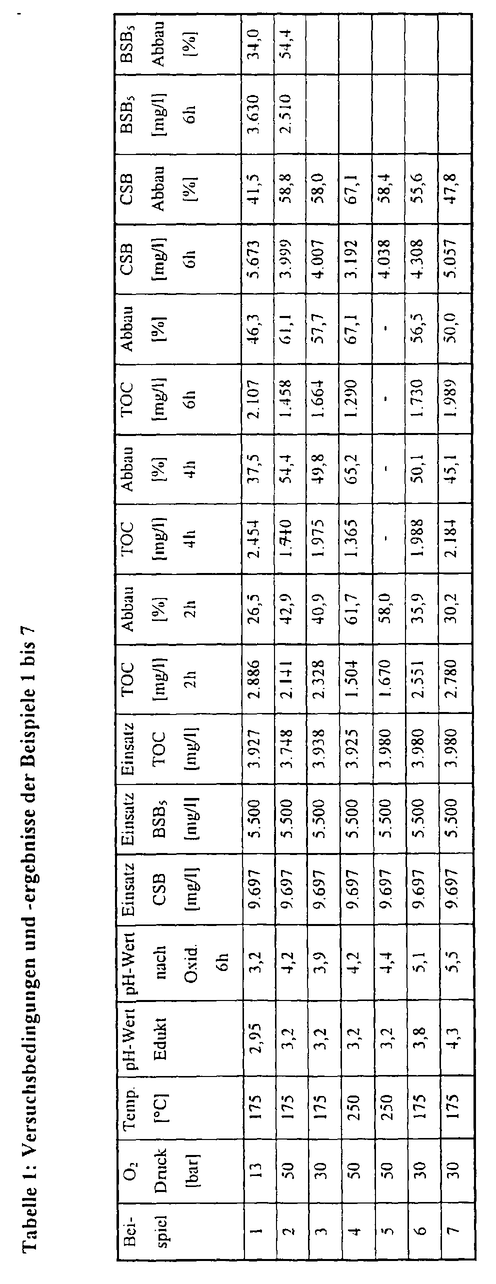

## Patentansprüche

1. Verfahren zur Reinigung von sauren oder sauer eingestellten Abwässern, die bei der Herstellung von Hydroxy- und Carbonyl-Verbindungen aus Hydroperoxiden nach dem Hock-Verfahren anfallen, durch Naßoxidation in flüssiger Phase mit sauerstoffhaltigem Gas,
dadurch gekennzeichnet,
daß die Abwässer bei Drücken von über 25 bar absolut und Temperaturen von 150 bis 250 °C behandelt werden.

2. Verfahren nach Anspruch 1,
dadurch gekennzeichnet,
daß der Druck 30 bis 50 bar absolut beträgt.

3. Verfahren nach Anspruch 1 oder 2,
dadurch gekennzeichnet,
daß die Temperatur im Bereich von 175 °C bis 250 °C liegt.

4. Verfahren nach zumindest einem der vorherigen Ansprüche,
dadurch gekennzeichnet,
daß der pH-Wert des zu behandelnden Abwassers größer als 3 ist.

5. Verfahren nach Anspruch 4,
dadurch gekennzeichnet,
daß der pH-Wert zwischen 3 und 5 beträgt.

6. Verfahren nach zumindest einem der vorherigen Ansprüche,
dadurch gekennzeichnet,
daß die zu behandelnden Abwässer vor der Naßoxidation mit einem Verfahren zur Entphenolung behandelt werden.

7. Verfahren nach zumindest einem der vorherigen Ansprüche,
dadurch gekennzeichnet,
daß die zu behandelnden Abwasserströme einzeln mittels Naßoxidation behandelt werden.

8. Verfahren nach zumindest einem der Ansprüche 1 bis 6,
dadurch gekennzeichnet,
daß die zu behandelnden Abwasserströme aus dem Hock-Verfahren nach ihrer Vereinigung der Naßoxidation zugeführt werden.

9. Verfahren nach Anspruch 8,
dadurch gekennzeichnet,
daß die Abwässer zunächst derart vereinigt werden, daß sie einen sauren pH-Wert aufweisen.

10. Verfahren nach zumindest einem der vorherigen Ansprüche,
dadurch gekennzeichnet,
daß das Einstellen eines sauren pH-Wertes mittels Schwefelsäure erfolgt.

11. Verfahren nach zumindest einem der vorherigen Ansprüche,
dadurch gekennzeichnet,
daß als sauerstoffhaltiges Gas Luft, reiner Sauerstoff oder ein Gemisch aus beidem eingesetzt wird.

12. Verfahren nach zumindest einem der vorherigen Ansprüche,
dadurch gekennzeichnet,
daß die Naßoxidation mit 100 bis 150 % der stöchiometrisch notwendigen Sauerstoffmenge durchführt wird.

13. Verfahren nach zumindest einem der vorherigen Ansprüche,
dadurch gekennzeichnet,
daß die Abwässer aus dem Hock-Verfahren zur Herstellung von Phenol und Aceton aus Cumolhydroperoxid stammen.
